# EUROPEAN PATENT APPLICATION

(11) **EP 4 842 007 A1**
(43) Date of publication of application: **18.11.2026**
(21) Application number: 25867640.2
(22) Date of filing: 21.07.2025
(51) Int. Cl.: H04N 23/88, G06T 7/90

(54) **IMAGE PROCESSING METHOD AND APPARATUS, DEVICE AND STORAGE MEDIUM**

(30) Priority: 20.09.2024 CN 202411321016
(71) Applicant: Tencent Technology (Shenzhen) Company Limited, Shenzhen, Guangdong 518057 (CN)
(72) Inventor: YANG, Weiming, Shenzhen, Guangdong 518057 (CN); WANG, Jun, Shenzhen, Guangdong 518057 (CN); WANG, Shaoming, Shenzhen, Guangdong 518057 (CN); GUO, Runzeng, Shenzhen, Guangdong 518057 (CN); HOU, Jinkun, Shenzhen, Guangdong 518057 (CN)
(74) Representative: AWA Sweden AB
(86) International application number: PCT/CN2025/109520
(87) International publication number: WO 2026/061118

(57) **Abstract**

An image processing method, executed by an electronic device. The method comprises : acquiring a captured image (S21); when the captured image comprises a preset image element, determining an average brightness value of the captured image on the basis of a channel value of each color channel of each pixel point of the captured image (S22); determining a predicted color cast coefficient of the captured image on the basis of the average brightness value of the captured image, the predicted color cast coefficient of the captured image being used for representing the predicted color cast degree of the captured image relative to a reference image (S23); and adjusting the captured image on the basis of the predicted color cast coefficient of the captured image, so as to generate a white balance image (S24).

## Description

### RELATED APPLICATION

This application claims priority to Chinese Patent Application No. 202411321016.2, entitled "IMAGE PROCESSING METHOD AND APPARATUS, DEVICE, AND STORAGE MEDIUM", and filed on September 20, 2024, which is incorporated herein by reference in its entirety.

### FIELD OF THE TECHNOLOGY

This disclosure relates to the technical field of image processing, including, to an image processing method and apparatus, a device, and a storage medium.

### BACKGROUND OF THE DISCLOSURE

With the development of image processing technology, white balance, as an important technical link in the field of image processing, may solve a series of problems regarding color reproduction and tone processing, making image colors more natural. However, white balance algorithms in the related art have a relatively slow processing speed, and a white balance effect in an extreme lighting environment is less than satisfactory. In addition, in the field of artificial intelligence, detecting preset image elements to further implement corresponding functions has brought great convenience to people, such as implementing palm verification and payment by detecting a palm, and implementing identity verification by recognizing a face. In this case, efficient and accurate white balance provides a strong data foundation for related applications of artificial intelligence. Therefore, there is a need to improve the white balance effect and accuracy of the related art.

### SUMMARY

Embodiments of this disclosure include an image processing method and apparatus, a device, and a storage medium.

In an aspect, an embodiment of this application provides an image processing method, the method including:
acquiring a captured image;
determining, when the captured image includes a preset image element, an average brightness value of the captured image based on channel values of color channels of each pixel point of the captured image;
determining a predicted color cast coefficient of the captured image based on the average brightness value of the captured image, the predicted color cast coefficient of the captured image indicating a predicted degree of color cast of the captured image relative to a reference image; and
adjusting, based on the predicted color cast coefficient of the captured image, the captured image to generate a white-balanced image.

In another aspect, an embodiment of this disclosure provides an image processing apparatus, the apparatus including:
an image acquisition module, configured to acquire a captured image;
a data processing module, configured to determine, when the captured image includes a preset image element, an average brightness value of the captured image based on channel values of color channels of each pixel point of the captured image;
a data prediction module, configured to determine a predicted color cast coefficient of the captured image based on the average brightness value of the captured image, the predicted color cast coefficient of the captured image being configured for indicating a predicted degree of color cast of the captured image relative to a reference image; and
an image adjustment module, configured to adjust, based on the predicted color cast coefficient of the captured image, the captured image to generate a white-balanced image.

In another aspect, an embodiment of this disclosure provides an electronic device, including a processor (an example of processing circuitry) and a memory, the processor and the memory being interconnected,
the foregoing memory being configured to store a computer program, and
the foregoing processor being configured to perform, when invoking the computer program, the image processing method provided in the embodiments of this disclosure.

In another aspect, an embodiment of this disclosure provides a computer-readable storage medium (e.g., non-transitory computer-readable storage medium), the computer-readable storage medium having a computer program stored therein, the computer program being executed by a processor to implement the image processing method provided in the embodiments of this disclosure.

In another aspect, an embodiment of this disclosure provides a computer program product, the computer program product including a computer program, the computer program, when executed by a processor, implementing the image processing method provided in the embodiments of this disclosure.

Details of one or more embodiments of this application are provided in the accompanying drawings and descriptions below. Other features, objectives, and advantages of this application become apparent from the specification, the accompanying drawings, and the claims.

### BRIEF DESCRIPTION OF THE DRAWINGS

To more clearly illustrate technical solutions in embodiments of this application, the accompanying drawings required in the embodiments will be briefly introduced below. Apparently, the accompanying drawings described below are merely embodiments of this application, and a person skilled in the art may obtain other drawings according to the disclosed drawings without involving any inventive effort.
FIG. 1 is a schematic diagram of an application scenario according to an embodiment of this disclosure.
FIG. 2 is a schematic flowchart of an image processing method according to an embodiment of this disclosure.
FIG. 3 is a schematic structural diagram of a camera according to an embodiment of this disclosure.
FIG. 4 is a schematic diagram of pixel point distribution according to an embodiment of this disclosure.
FIG. 5 is a schematic diagram of a scenario for determining an image feature according to an embodiment of this disclosure.
FIG. 6 is a schematic diagram of a training flow of an image recognition model according to an embodiment of this disclosure.
FIG. 7 is a schematic diagram of a training flow of a color cast prediction model according to an embodiment of this disclosure.
FIG. 8a to FIG. 8f are schematic diagrams of palm images according to an embodiment of this disclosure.
FIG. 9 is a schematic diagram of predicted color cast coefficient distribution according to an embodiment of this disclosure.
FIG. 10 is a schematic structural diagram of an image processing apparatus according to an embodiment of this disclosure.
FIG. 11 is a schematic structural diagram of an electronic device according to an embodiment of this disclosure.

### DESCRIPTION OF EMBODIMENTS

The technical solutions in embodiments of this application will be clearly and completely described below in conjunction with the accompanying drawings in the embodiments of this application. Apparently, the described embodiments are merely a part of the embodiments of this application, rather than all embodiments. Based on the embodiments of this application, all other embodiments obtained by a person skilled in the art without creative efforts fall within the protection scope of this disclosure.

In the embodiments of the present disclosure including the embodiments of both the claims and the specification (hereinafter referred to as "all embodiments of the present disclosure"), an image processing method provided may be used to adjust a captured image obtained by an image processing device through capturing, to generate a white-balanced image, for correcting a color temperature of the captured image, restoring true colors of a preset image element in the captured image, and improving image color accuracy of the captured image.

The image processing device in all embodiments of this disclosure may be a device having an image capturing function and performing object recognition and detection on a captured image obtained through capturing, including but not limited to a human body recognition device, a face recognition device, a palm print recognition device, or other object recognition devices. This may be determined based on requirements of an actual application scenario, and is not limited herein.

For example, the human body recognition device may be a smart camera installed in public places such as shopping malls and schools, and may implement real-time human body detection and abnormal behavior detection through human body recognition technology to improve safety management efficiency. In this scenario, the preset image element in all embodiments of this disclosure may be a human body.

In addition to the human body recognition device, the image processing device in all embodiments of this disclosure further includes a face recognition device. The face recognition device includes, but is not limited to, a face verification and payment device, an access control camera, and the like. This is not limited herein. The face recognition device may be configured to analyze face features to perform identity verification, recognition, payment, and the like. In this scenario, the preset image element in all embodiments of this disclosure may be a face.

The face recognition device may be a camera of an access control system, a mobile phone, a laptop computer, a smart security camera, and the like. This is not limited herein.

In addition to the face recognition device, the image processing device in all embodiments of this disclosure further includes a palm print recognition device. The palm print recognition device may perform identity verification, payment, and the like based on human palm print features. In this scenario, the preset image element in all embodiments of this disclosure may be a palm image. The palm print recognition device may be a palm verification device, a palm print recognition access control system, and the like. This is not limited herein.

The image processing device in all embodiments of this disclosure may further be a traffic camera in a road traffic field for performing vehicle recognition or traffic sign recognition, and the preset image element in all embodiments of this disclosure may be a vehicle, a traffic sign, and the like. This is not limited herein.

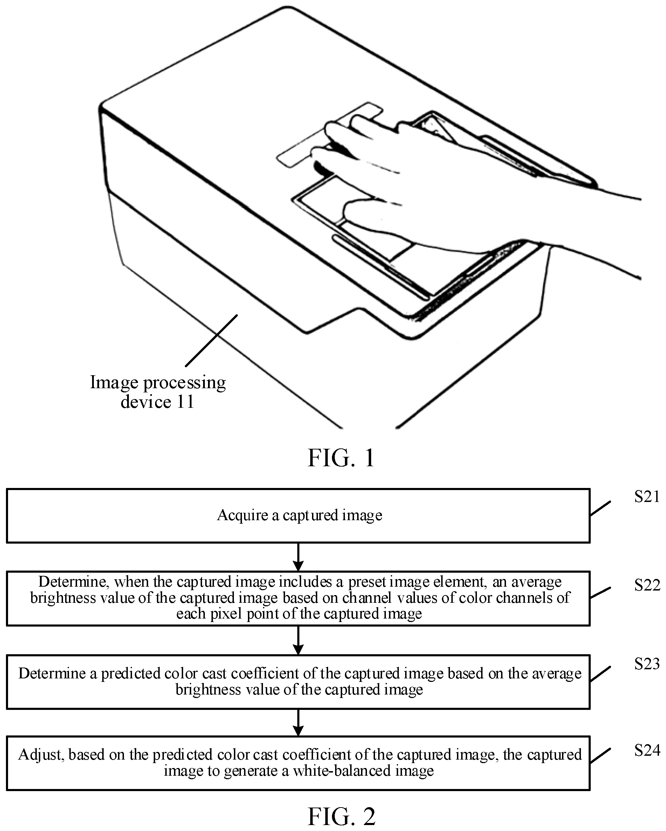

FIG. 1 is a schematic diagram of an application scenario according to an embodiment of this disclosure.

As shown in FIG. 1, it is assumed that an image processing device 11 is a palm verification device, and the image processing device 11 continuously performs capturing during a palm verification and payment process of an object 12. For a captured image obtained by the image processing device 11 at any moment through capturing, it may be determined whether the captured image includes a preset image element (a palm image).

In a case where it is determined that the captured image includes the preset image element, an average brightness value of the captured image may be determined based on channel values of color channels of each pixel point of the captured image.

Further, a predicted color cast coefficient of the captured image may be determined based on the average brightness value of the captured image, and the captured image may be further adjusted based on the predicted color cast coefficient of the captured image to generate a white-balanced image.

The white-balanced image is an image obtained by performing white balance on the captured image, and the white balance is processing for correcting a color deviation caused by different lighting conditions and restoring true colors of an object in the captured image.

The embodiments of this disclosure may be performed by the image processing device 11, or may be performed by a server associated with the image processing device or a terminal device having an image processing capability. This may be determined based on requirements of an actual application scenario, and is not limited herein.

The server may be an independent physical server, for example, a video server or a streaming media server, or may be a server cluster or a distributed system including a plurality of physical servers, or may be a cloud server providing basic cloud computing services such as a cloud service, a cloud database, cloud computing, a cloud function, cloud storage, a network service, cloud communication, a middleware service, a domain name service, a security service, a content delivery network (CDN), and a big data and artificial intelligence platform.

The terminal device may be a terminal device having an image processing capability such as a smartphone, a tablet computer, a laptop computer, a desktop computer (including a display), a smart watch, an in-vehicle terminal, an aircraft, a smart home appliance (for example, a smart television), or a wearable device.

FIG. 2 is a schematic flowchart of an image processing method according to an embodiment of this disclosure. As shown in FIG. 2, the image processing method provided in the embodiments of this disclosure may include the following operations:
S21: Acquire a captured image.

In some feasible implementations, the captured image may be any image obtained by the image processing device through capturing during an image capturing process. The captured image may include the preset image element, may include a part of the preset image element, or may not include any preset image element. The captured image may be determined based on an image capturing timing of the image processing device, and is not limited herein.

For example, when the image processing device is a face recognition device, the captured image may be any image obtained by the face recognition device through capturing after a face recognition function is enabled. At this time, the preset image element is a face, and the captured image obtained by the face recognition device through capturing may include the preset image element, may include a part of the preset image element, or may be an image that does not include the preset image element and is obtained through capturing before a face enters a capturing area.

For example, when the image processing device is a palm verification device, the captured image may be any image obtained by the palm verification device through capturing within a period of time after the palm verification device senses through a sensor that someone is approaching, or after a payment instruction is received and the palm verification device is enabled. At this time, the preset image element is a palm image, and the captured image obtained by the palm verification device through capturing may also include the preset image element, may include a part of the preset image element, or may be an image that does not include the preset image element and is obtained through capturing before a palm enters a capturing area.

For example, when the image processing device is a traffic camera, the captured image may be a traffic image obtained by the traffic camera through capturing at any moment. At this time, in a case where the preset image element is a vehicle, the captured image may be an image including a plurality of vehicles obtained by the traffic camera through capturing, or may be an image obtained by the traffic camera through capturing when no vehicle passes by.

In some feasible implementations, to make lighting conditions when capturing the captured image closer to natural lighting conditions (preset lighting conditions), thereby making colors of the captured image closer to colors in a natural lighting environment, the image processing device may determine a lighting environment through a sensor. When capturing the captured image, if the lighting environment has no light source or a color temperature of a current lighting environment is lower than a threshold (e.g., 6500 k), a supplementary light source may be invoked, to perform capturing under lighting conditions constructed by the supplementary light source.

A color temperature of the supplementary light source is 6500 K, that is, a color temperature close to natural light (such as sunlight at noon on a sunny day). Under this color temperature, light presents a relatively bright white, thereby restoring natural lighting conditions as much as possible.

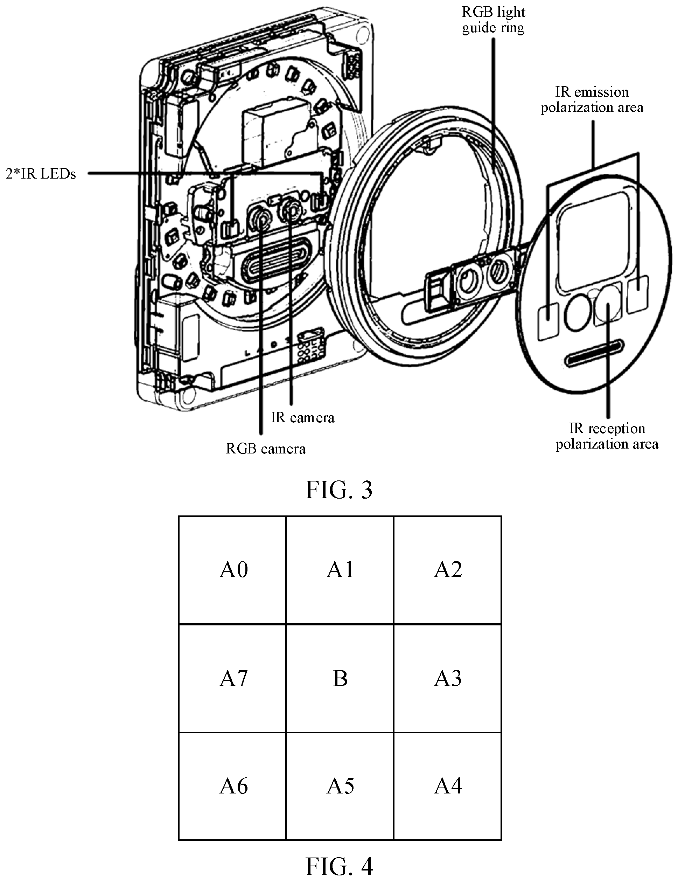

FIG. 3 is a schematic structural diagram of a camera according to an embodiment of this disclosure. A camera structure shown in FIG. 3 may be a camera structure of an image processing device such as a palm verification device or a face recognition device. The camera structure may include a red-green-blue (RGB) camera, an infrared (IR) camera, an RGB light guide ring, an IR emission polarization area, an IR reception polarization area, and two IR light emitting diodes (LEDs).

The IR LED is a diode capable of emitting infrared rays, and is usually applied to occasions requiring night vision or working in a low-light environment, such as a camera and an infrared remote controller. A main function of the IR LED is to provide an infrared light source in an environment with insufficient light or in complete darkness, so that the camera is capable of capturing and recording clear images.

The RGB camera uses three standard channels of red, green, and blue to capture color information within a visible light spectrum range. The RGB camera obtains various colors through variations of the three color channels and superposition between the three color channels, thereby generating color images.

The IR camera uses an infrared sensor to capture radiation within an infrared spectrum range. These cameras are capable of sensing infrared radiation emitted by or reflected from an object, instead of visible light.

The RGB light guide ring may refer to a ring-shaped light source configured for illumination or decoration, and is capable of emitting red, green, and blue light, and generating light of various colors by controlling mixing of different color lights. The RGB light guide ring is used in fields such as display devices, lighting devices, and electronic products, and is configured for improving visual effects of a product.

The supplementary light source in all embodiments of this disclosure may be the RGB light guide ring, that is, a color temperature of the RGB light guide ring in FIG. 3 is set to 6500 K.

The IR emission polarization area may refer to an area where an infrared emitter emits an infrared signal, and the IR reception polarization area may refer to an area where an infrared receiver receives an infrared signal. By using polarization technology, it may be ensured that the infrared signal has a particular directionality and anti-interference capability during emission and reception.

S22: Determine, when the captured image includes a preset image element, an average brightness value of the captured image based on channel values of color channels of each pixel point of the captured image.

In some feasible implementations, after determining the captured image, whether the captured image includes the preset image element may be first determined. When the captured image includes the preset image element, the captured image may be further processed. When the captured image does not include the preset image element, there is no need to perform any processing on the captured image.

For example, when the preset image element is a palm image, when the captured image includes the palm image, the captured image may be further processed, to implement functions such as palm print payment or palm print recognition. When the captured image does not include the palm image, corresponding technical functions cannot be implemented through a palm. Therefore, there is no need to perform any processing on the captured image.

In some examples, after determining the captured image, an image similarity between the captured image and a preset image may be determined. When the image similarity is greater than a similarity threshold, it may be determined that the captured image includes the preset image element. When the image similarity does not reach the similarity threshold, it may be determined that the captured image does not include the preset image element.

The preset image includes a standard preset image element, such as a standard face image and a standard palm image.

In all embodiments of the present disclosure, when determining whether the captured image includes the preset image element, image recognition may be performed on the captured image based on an artificial intelligence mode, to determine whether the captured image includes the preset image element.

For example, when the preset image element is a face, face recognition may be performed on the captured image through a face recognition algorithm, to determine whether the captured image includes a face.

In some feasible implementations, when performing image recognition on the captured image based on an artificial intelligence mode, an image feature of the captured image may be first determined. Further, a predicted image type of the captured image may be determined based on the image feature of the captured image.

The predicted image type includes a first type and a second type. When the predicted image type of the captured image belongs to the first type, it may be determined that the captured image includes the preset image element; and when the predicted image type of the captured image belongs to the second type, it may be determined that the captured image does not include the preset image element.

In some examples, when determining the image feature of the captured image, since the preset image element has an external contour, a shape feature of the captured image may be determined as the image feature of the captured image. Further, the predicted image type of the captured image may be determined based on the image feature of the captured image.

The shape feature of the captured image includes, but is not limited to, a contour feature, a boundary direction histogram feature, or a Fourier shape descriptor feature of the captured image, and the like. This may be determined based on requirements of an actual application scenario, and is not limited herein. The Fourier shape descriptor feature is a feature representation method used for describing a shape of an image. In image processing, a contour of the captured image is first extracted through methods such as edge detection. Then, normalization is performed on the extracted contour, so that the extracted contour has the same starting point, direction, and size. In this way, differences of the contour in position, direction, and scale may be eliminated, facilitating comparison between different images. Subsequently, a Fourier transform is performed on the normalized contour, to convert the contour from a spatial domain to a frequency domain. In the frequency domain, shape information of the contour is encoded as a series of Fourier coefficients. Since high-frequency coefficients usually include noise and detail information, and low-frequency coefficients may better reflect overall shape characteristics of the contour, lower-frequency Fourier coefficients are selected as the Fourier shape descriptor feature. This feature may effectively describe a shape of an image, and has important applications in tasks such as image recognition and classification.

As an example, through an edge detection algorithm (such as Canny and Sobel), edges in the captured image may be identified through brightness variations of the pixel points of the captured image. Further, based on edge detection, continuous contour lines are formed by connecting adjacent edge pixel points, so that the contour feature of the captured image may be determined based on the contour lines, and used as the image feature of the captured image.

As an example, edge detection may also be performed on the captured image through an edge detection algorithm, to obtain edge information of the captured image. Further, gradient directions of edge pixel points may be quantized into a finite number of direction intervals, such as 8 or 16 directions. Therefore, numbers of edge pixel points in each direction interval may be counted, to construct a boundary direction histogram feature, to reflect distribution of edge pixel points in various directions. Based on this, the boundary direction histogram feature may be determined as the image feature of the captured image.

As an example, after extracting a contour in the captured image based on the foregoing mode, normalization may be performed on the extracted contour, so that the extracted contour has the same starting point, direction, and size, facilitating comparison. Further, a Fourier transform may be performed on the normalized contour, to convert the contour from a spatial domain to a frequency domain. In the frequency domain, shape information of the contour is encoded as a series of Fourier coefficients. Since high-frequency coefficients usually include noise and detail information, lower-frequency Fourier coefficients may be selected as the Fourier shape descriptor feature, to better reflect overall shape characteristics of the contour, and be determined as the image feature of the captured image.

In all embodiments of the present disclosure, when determining the image feature of the captured image, a texture feature of the captured image may also be determined. Further, the texture feature may be determined as the image feature of the captured image. The texture feature reflects a visual feature of a homogeneous phenomenon in the captured image, reflects a surface organizational structure arrangement attribute of the preset image element, and has a relatively accurate feature identification for a preset image element having a rich texture such as fabric and a palm print.

In all embodiments of the present disclosure, when determining the image feature of the captured image, a color feature of the captured image may also be determined, and determined as the image feature of the captured image. The color feature may be configured for describing a surface property of the preset image element in the captured image, and is a global feature.

In some feasible implementations, when determining the color feature of the captured image and determining the color feature as the image feature of the captured image, a grayscale image of the captured image may be determined, and block processing may be performed on the grayscale image to obtain a plurality of block images.

When performing block processing on the grayscale image, the block processing may be performed based on a preset window, such as using a 5×5 window to segment the grayscale image, to obtain a plurality of 5×5 block images.

The window size may be determined based on requirements of an actual application scenario, and is not limited herein.

Block images obtained by performing block processing on the grayscale image may partially overlap, or may not overlap, which may be determined based on a step length during block processing. This is not limited herein.

Further, a histogram of oriented gradients (HOG) feature of each block image may be determined. Then, the image feature of the captured image may be determined based on the histogram of oriented gradients feature of each block image.

In some examples, when determining the grayscale image of the captured image, for each pixel point of the captured image, an average value of channel values of color channels of the pixel point may be determined. Further, the grayscale image of the captured image may be obtained.

In another example, when determining the grayscale image of the captured image, for each pixel point of the captured image, weighted averaging may be performed on channel values of the color channels of the pixel point, to obtain the grayscale image of the captured image.

For example, a grayscale value of each pixel point is Gray=0.299R+0.587G+0.114B, where R, G, and B represent a channel value of a red channel, a channel value of a green channel, and a channel value of a blue channel, respectively. 0.299, 0.587, and 0.114 are a weight of the red channel, a weight of the green channel, and a weight of the blue channel, respectively; and weights of the color channels may be specifically determined based on requirements of an actual application scenario, and are not limited herein.

In some examples, for each block image, when determining a histogram of oriented gradients feature of the block image, a depth image of the block image may be determined. For each pixel point of a corresponding depth image, a horizontal direction gradient and a vertical direction gradient of the pixel point may be calculated.

The horizontal direction gradient may be a depth value of a right adjacent pixel point of the pixel point minus a depth value of a left adjacent pixel point of the pixel point. The vertical direction gradient may be a depth value of a lower adjacent pixel point of the pixel point minus a depth value of an upper adjacent pixel point of the pixel point.

When a pixel point is located at an edge of the depth image in which it is located, that is, there is no upper adjacent pixel point, lower adjacent pixel point, left adjacent pixel point, or right adjacent pixel point of the pixel point, the missing pixel point may be padded through a mirror padding mode.

FIG. 4 is a schematic diagram of pixel point distribution according to an embodiment of this disclosure. For pixel point B, a depth value of a right adjacent pixel point of the pixel point B is A3, a depth value of a left adjacent pixel point of the pixel point B is A7, a depth value of an upper adjacent pixel point of the pixel point B is A1, and a depth value of a lower adjacent pixel point of the pixel point B is A5.

Based on this, a horizontal direction gradient of the pixel point B is *Gₓ* = *A*3 - *A*7, and a vertical direction gradient of the pixel point B is *G_{y}* = *A*5 - *A*1.

Then, a gradient magnitude of the pixel point B is $G = \sqrt{{{G}_{x}}^{2} - {{G}_{y}}^{2}}$, and a direction is $θ = {tan}^{- 1} \left(\frac{{G}_{y}}{{G}_{x}}\right)$, where *θ* ∈ [0, 360°)*or*[0, 180°).

Based on the foregoing implementation, it may be determined that an angle of a gradient direction of each pixel point is a radian value in a range of 0 to 360 degrees or a radian value in a range of 0 to 180 degrees. If it is determined that the angle of the gradient direction of each pixel point is a radian value in a range of 0 to 360 degrees, the range may be further constrained to 0 to 180 degrees.

Further, 0 to 180 degrees is divided into 9 directions (bins), each direction being 20 degrees. A constrained angle is divided by 20, so that a current gradient direction angle value is in a range of [0, 9). Further, by using an interpolation mode, the gradient magnitude is mapped into different gradient direction ranges, to finally obtain an HOG feature including 9 bins.

A number of bins may be determined based on requirements of an actual application scenario, and is not limited herein.

Since factors such as illumination and shadows may cause relatively large differences in gradient magnitudes between different block images, after obtaining the HOG feature of each block image, normalization may be performed on the HOG feature of each block image, to obtain a final HOG feature.

The foregoing normalization mode may be L2 norm normalization, that is, the HOG feature of each block image is divided by an L2 norm thereof, so that a magnitude thereof is 1, or other related normalization modes may also be adopted. This is not limited herein.

In some examples, when determining the image feature of the captured image based on the HOG feature of each block image, the image feature of the captured image of each block image may be inputted into a pre-trained feature fusion network, to obtain the image feature of the captured image. It is assumed that the pre-trained feature fusion network is a simple fully connected neural network, and a number of input layer nodes of the pre-trained feature fusion network is the same as a sum of feature vector lengths of HOG features of all block images. A hidden layer has 128 nodes, an activation function is rectified linear unit (ReLU), and a number of output layer nodes is an image feature dimension of the captured image. The HOG features of the block images are concatenated in sequence into a vector and inputted into the pre-trained feature fusion network. Through computation of the network, the image feature of the captured image is finally outputted.

In another example, the HOG features of the block images may be concatenated end-to-end based on position information of each block image relative to the captured image, to obtain the image feature of the captured image.

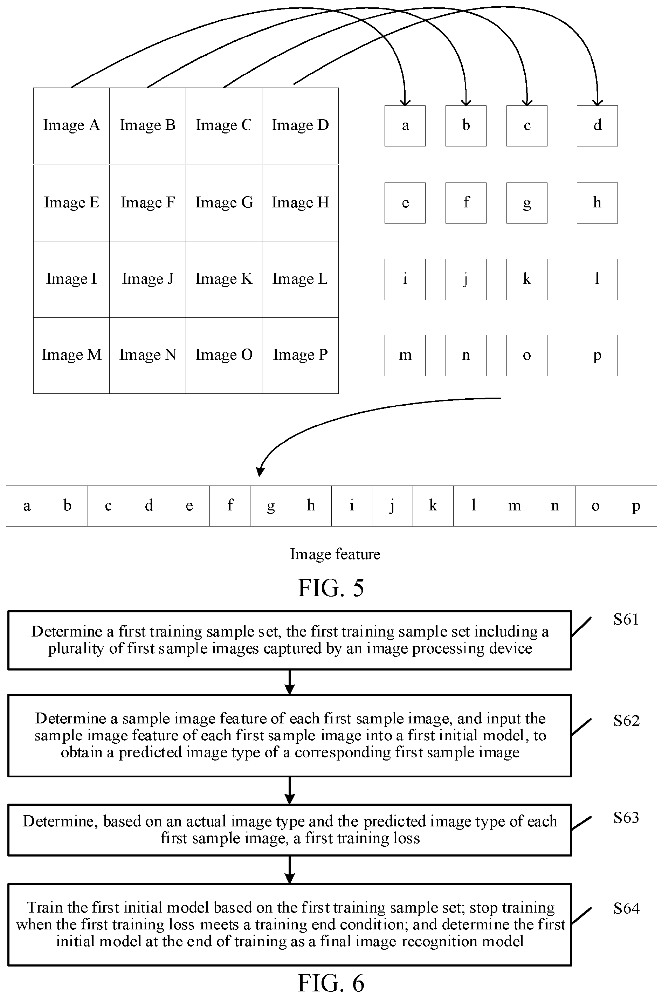

For example, FIG. 5 is a schematic diagram of a scenario for determining an image feature according to an embodiment of this disclosure. It is assumed that image A to image P are depth images of each block image. Based on the foregoing implementation, HOG feature a to HOG feature p of each block image may be determined. If position information of image A to image P relative to the captured image is as shown in FIG. 5, the HOG feature a to the HOG feature p may be concatenated end-to-end based on the position information, to obtain the image feature of the captured image.

When determining a depth image of each block image, each block image may be inputted into a pre-trained feature processing network, to obtain a corresponding depth image.

The block images may be inputted into a lightweight convolutional neural network (CNN), and a plurality of lightweight convolutional layers may be used to extract features in the block images. These convolutional layers usually have a relatively small number of convolutional kernels (filters) and relatively small convolutional kernel sizes, to reduce an amount of computation and a number of parameters. Meanwhile, techniques such as depthwise separable convolution or grouped convolutions may be adopted to further reduce computational complexity.

Depthwise separable convolution is a convolutional technique configured for reducing computational complexity of convolution. In a traditional convolution operation, each convolutional kernel performs convolutional computation on all channels of an input feature map, and an amount of computation of the convolutional computation is relatively large. However, depthwise separable convolution decomposes a traditional convolution operation into two operations: depthwise convolution and pointwise convolution. Depthwise convolution performs convolutional operations on each channel of the input feature map, and each channel uses an independent convolutional kernel, so that the number of convolutional kernels is reduced. Pointwise convolution then uses a 1×1 convolutional kernel to perform convolution on an output of depthwise convolution, to fuse information of different channels. Through this mode, depthwise separable convolution maintains a particular feature extraction capability while greatly reducing the amount of computation and the number of parameters, improving efficiency of convolutional operations, and is applicable to resource-constrained scenarios, such as image processing on a mobile device.

After each convolutional layer, an activation function (such as ReLU) is usually added to increase non-linear capability of the network. Moreover, based on actual requirements, pooling layers (such as max pooling and average pooling) may be included between convolutional layers, or convolution with a step length greater than 1 may be adopted to implement downsampling, to reduce feature sizes obtained by the convolutional layers and increase receptive fields.

An attention mechanism is inserted at partial stages of the convolutional layers (usually deeper layers), to enhance attention of the network to the block images. The attention mechanism may have multiple forms, including but not limited to spatial attention, channel attention, or a combination thereof.

Spatial attention is an attention mechanism configured for enhancing attention of a neural network to different spatial positions in an image. In the pre-trained feature processing network, the spatial attention mechanism is inserted at partial stages of the convolutional layers (usually deeper layers). The mechanism analyzes an input feature map to calculate the importance weight of each spatial position. In some examples, the mechanism considers feature responses at different positions in the feature map, assigns higher weights to positions that are more important for a current task, and assigns lower weights to less important positions. In this way, in subsequent processing, the network pays more attention to those important spatial positions, thereby improving a capability of capturing key information in the image and enhancing performance of the network. Channel attention is another attention mechanism, and it focuses on importance of different channels in an image feature map. In a neural network, a feature map is usually composed of a plurality of channels, and each channel represents different feature information. The channel attention mechanism analyzes a channel dimension of the feature map, to calculate the importance weight of each channel. The channel attention mechanism considers feature response relationships between different channels, assigns higher weights to channels that are more critical for a current task, and assigns lower weights to less important channels. In subsequent processing, the network pays more attention to those important channels, thereby highlighting key feature information in the image and improving feature expression capability and performance of the network.

Based on this, a final output of the convolution layer and a final output of the attention layer may be fused, to obtain a depth image.

In some feasible implementations, when determining the predicted image type of the captured image based on the image feature of the captured image, the image feature of the captured image may be inputted into a pre-trained image recognition model, to predict the image type of the captured image.

The predicted image type includes a first type and a second type. When the predicted image type of the captured image belongs to the first type, it may be determined that the captured image includes the preset image element; and when the predicted image type of the captured image belongs to the second type, it may be determined that the captured image does not include the preset image element.

The pre-trained image recognition model may perform prediction on the captured image based on a regression algorithm, or may be constructed by using classification networks such as a CNN used for image classification tasks. This may be determined based on requirements of an actual application scenario, and is not limited herein.

In some feasible implementations, when determining an average brightness value of the captured image based on channel values of the color channels of each pixel point of the captured image, a first image region in which the preset image element in the captured image is located (e.g., a first image region that includes at least a portion of the preset image element in the captured image) may be first determined. For each pixel point in the first image region, weighted average may be performed on the color channels to obtain a brightness value of a corresponding pixel point. Further, an average value of brightness values of the pixel points in the first image region may be determined as the average brightness value of the captured image.

For example, a brightness value of each pixel point may be determined by 0.299R + 0.587G + 0.114B, where R, G, and B represent a channel value of a red channel, a channel value of a green channel, and a channel value of a blue channel, respectively. 0.299, 0.587, and 0.114 are a weight of the red channel, a weight of the green channel, and a weight of the blue channel, respectively; and weights of the color channels may be determined based on requirements of an actual application scenario, and are not limited herein.

Based on this, an average value of brightness values of the pixel points in the first image region may be calculated, to obtain the average brightness value of the captured image.

In all embodiments of the present disclosure, an average channel value of each color channel in the first image region may be determined, such as determining an average value of red channels, an average value of green channels, and an average value of blue channels of the pixel points in the first image region. Moreover, average channel values of the three color channels may be averaged, to obtain the average brightness value of the captured image.

In all embodiments of the present disclosure, the captured image may be converted into a grayscale image. Further, an average value of grayscale values of the pixel points of the captured image may be determined as the average brightness value of the captured image.

In all embodiments of the present disclosure, the captured image may be converted to a frequency domain (such as by using a Fourier transform), to obtain a direct current (DC) component of the captured image, and a value of the DC component may be determined as the average brightness value of the captured image.

In all embodiments of the present disclosure, a part of pixel points may be selected randomly or according to a particular rule, and the average brightness value of the captured image may be calculated by any of the foregoing methods.

In all embodiments of the present disclosure, when determining the average brightness value of the captured image, the first image region in which the preset image element in the captured image is located may be determined. For example, element recognition may be performed on the captured image, and a recognition bounding box of the preset image element may be cropped to obtain the first image region. In another example, after determining the preset image element in the captured image, the preset image element may be cropped to obtain the first image region.

Based on any of the foregoing modes, an average brightness value of the first image region may be determined, and the average brightness value of the first image region may be determined as the average brightness value of the captured image, or the average brightness value of the first image region may be multiplied by a preset weight to obtain the average brightness value of the captured image, thereby facilitating reduction of an amount of computation and concentrating the average brightness value of the captured image on brightness performance of the preset image element.

For example, after determining the first image region in which the preset image element is located, arithmetic average may be performed on the color channels of each pixel point of the first image region, to obtain a first channel value, a second channel value, and a third channel value. Further, a weighted average value or an arithmetic average value of the first channel value, the second channel value, and the third channel value may be determined as the average brightness value of the first image region, that is, the average brightness value of the captured image is obtained.

The first channel value is an average channel value of red channels of the pixel points of the first image region, the second channel value is an average channel value of green channels of the pixel points of the first image region, and the third channel value is an average channel value of blue channels of the pixel points of the first image region.

If the arithmetic average value is used to determine the average brightness value of the first image region, it is assumed that the first channel value is *C*₁, the second channel value is *C*₂, and the third channel value is *C*₃, then a calculation formula for the average brightness value *L* of the first image region is $L = \frac{{C}_{1} + {C}_{2} + {C}_{3}}{3}$. If the weighted average value is used to determine the average brightness value of the first image region, it is assumed that a weight of the first channel value is *w*₁, a weight of the second channel value is *w*₂, and a weight of the third channel value is *w*₃, and *w*1 + *w*₂ + *w*₃ = 1, then a calculation formula for the average brightness value *L* of the first image region is *L* = *w*₁*C*₁ + *w*₂*C*₂ + *w*₃*C*₃, that is, the average brightness value of the captured image is obtained.

In all embodiments of the present disclosure, image preprocessing operations and a calculation process of the average brightness value may be implemented on a graphics processing unit (GPU) based on a new engine for next generation objects (NEON) technology, to reduce CPU occupation, facilitate reduction of computational complexity, and improve image processing efficiency.

The NEON technology is a single instruction multiple data (SIMD) architecture extension, allowing a single instruction to simultaneously process a plurality of data elements, thereby accelerating a calculation process and providing performance acceleration for an image processing process.

S23: Determine a predicted color cast coefficient of the captured image based on the average brightness value of the captured image.

In some feasible implementations, the predicted color cast coefficient of the captured image is configured for indicating a predicted degree of color cast of the captured image relative to the reference image, that is, is configured for indicating a degree to which a color of the captured image deviates from a color of the reference image.

The reference image may be a standard white image or a reference white image, such as an image with an RGB value of [255, 255, 255] or an image with an RGB value of an illumination value. This is not limited herein.

When determining the predicted color cast coefficient of the captured image, the average brightness value of the captured image may be inputted into a pre-trained color cast prediction model, to obtain the predicted color cast coefficient of the captured image. It is assumed that the pre-trained color cast prediction model is a linear regression model, an expression of the pre-trained color cast prediction model being *y* = *ax* + *b*, where *y* represents the predicted color cast coefficient, *x* represents the average brightness value of the captured image, and *a* and *b* are parameters obtained by model training. The average brightness value *x* of the captured image is substituted into the model, to obtain the predicted color cast coefficient *y* of the captured image.

S24: Adjust, based on the predicted color cast coefficient of the captured image, the captured image to generate a white-balanced image.

After the predicted color cast coefficient of the captured image is determined, the captured image may be adjusted in a plurality of modes based on the coefficient, to generate a white-balanced image.

In some feasible implementations, the captured image may be adjusted based on color space mapping of the predicted color cast coefficient, to generate a white-balanced image. In some examples, the captured image may be converted from an RGB space to a Lab color space. The Lab color space includes a brightness channel L, a red-green channel a, and a blue-yellow channel b. In all embodiments of the present disclosure, the predicted color cast coefficient is a comprehensive value, and reflects a degree and a direction in which an image color deviates from a standard color. When the predicted color cast coefficient indicates that the image color is offset in a red-green dimension, the a channel may be adjusted; and when the predicted color cast coefficient indicates that the image color is offset in a blue-yellow dimension, the b channel may be adjusted. After adjustment is performed according to a preset correspondence between a predicted color cast coefficient interval and a channel adjustment amount, the captured image is further converted back from the Lab color space to the RGB color space, to obtain a white-balanced image.

In some feasible implementations, after the predicted color cast coefficient of the captured image is determined, a degree of color cast of the captured image may be determined based on the coefficient. Further, based on a white balance function of the image processing device, ratios of channel values of the color channels of each pixel point of the captured image may be adjusted, to obtain a white-balanced image.

In all embodiments of the present disclosure, when adjusting the captured image based on the predicted color cast coefficient of the captured image, a predicted color cast coefficient of a standard image may be determined. The standard image is an image obtained by the image processing device through capturing in a specific preset lighting environment and including the preset image element. The preset lighting environment usually simulates natural lighting conditions, such as natural light at noon, and such a lighting environment is capable of providing a relatively stable and accurate color reference. The predicted color cast coefficient of the standard image is configured for indicating a predicted degree of color cast of the standard image relative to the reference image. When performing white balance adjustment on the captured image, the predicted color cast coefficient of the standard image is used as an important reference value, and is compared with the predicted color cast coefficient of the captured image, thereby determining an adjustment coefficient, to correct a color deviation of the captured image and make colors of the captured image closer to a real scene.

The predicted color cast coefficient of the standard image is configured for indicating a predicted degree of color cast of the standard image relative to the reference image.

The standard image is an image acquired by the image processing device in the preset lighting environment and including the preset image element.

The preset lighting environment may be natural light (such as noon). For example, the standard image may be a palm image obtained by the palm verification device through capturing in natural light, or a face image obtained by the access control camera through capturing in natural light.

A mode of determining the predicted color cast coefficient of the standard image is the same as a mode of determining the predicted color cast coefficient of the captured image.

Further, after the predicted color cast coefficient of the standard image is determined, the adjustment coefficient may be determined based on the predicted color cast coefficient of the captured image and the predicted color cast coefficient of the standard image.

The adjustment coefficient is configured for indicating a predicted degree of color cast of the captured image relative to the standard image.

Based on this, the captured image may be adjusted based on the determined adjustment coefficient, to obtain the white-balanced image.

The adjustment coefficient may be a difference between the predicted color cast coefficient of the captured image and the predicted color cast coefficient of the standard image, or may be a product of the difference between the predicted color cast coefficient of the captured image and the predicted color cast coefficient of the standard image and a preset weight. This may be determined based on requirements of an actual application scenario, and is not limited herein.

It is assumed that the predicted color cast coefficient of the captured image is *q*, and the predicted color cast coefficient of the standard image is *r*, the adjustment coefficient is *s* = *q* - *r*. For any color channel of any pixel of the captured image, if a channel value of the color channel is *t*, then an initial channel value of the color channel is *w* = *t* × (1 + *s*). According to a preset mapping rule, initial channel values of each pixel point of the captured image in the color channels are mapped into a preset channel value range [0,255], to obtain white-balanced channel values of each pixel point in the color channels. Further, an image constructed based on the white-balanced channel values is determined as the white-balanced image.

When the predicted color cast coefficient of the captured image is greater than the predicted color cast coefficient of the standard image, the predicted degree of color cast of the captured image relative to the reference image is higher than the predicted degree of color cast of the standard image relative to the reference image, and the adjustment coefficient determined at this time is a positive value. When the predicted color cast coefficient of the captured image is less than the predicted color cast coefficient of the standard image, the predicted degree of color cast of the captured image relative to the reference image is lower than the predicted degree of color cast of the standard image relative to the reference image, and the adjustment coefficient determined at this time is a negative value.

When performing white balance adjustment on the captured image based on the adjustment coefficient, for each pixel point of the captured image, the channel value of the pixel point in each color channel may be multiplied by the adjustment coefficient to obtain a channel value variation. Further, the channel value of the pixel point in each color channel and the channel value variation may be added to obtain an initial channel value of the pixel point in each color channel.

The channel value variation is an intermediate calculation amount in a process of performing white balance adjustment on the captured image. After the adjustment coefficient is determined based on the predicted color cast coefficient of the captured image and the predicted color cast coefficient of the standard image, for each color channel of each pixel point of the captured image, the channel value of the pixel point in the color channel is multiplied by the adjustment coefficient, and a result obtained is the channel value variation. The variation reflects a magnitude of adjustment to be performed on the pixel point in the color channel. By adding the channel value variation and an original channel value of the pixel point in the color channel, the initial channel value of the pixel point in the color channel is obtained, thereby achieving adjustment to colors of the captured image.

Further, the white-balanced image obtained after white balance adjustment is performed on the captured image may be determined based on initial channel values of each pixel point of the captured image in the color channels.

In some examples, the initial channel value of each pixel point of the captured image in each color channel may be multiplied by a corresponding channel weight, to obtain the initial channel value of the pixel point in each color channel. Further, the white-balanced image may be obtained. In another example, after obtaining the initial channel values of each pixel point of the captured image in the color channels, an image constructed based on the initial channel values may be directly determined as the white-balanced image. In another example, according to a preset mapping rule, initial channel values of each pixel point of the captured image in the color channels are mapped into a preset channel value range, to obtain white-balanced channel values of each pixel point in the color channels. Further, an image constructed based on the initial channel values is determined as the white-balanced image.

The preset channel value range may be a channel value range of [0, 255] for color channels. That is, after obtaining the initial channel values of each pixel point of the captured image in the color channels, each initial channel value may be mapped into a range of [0, 255] based on a unified preset mapping rule, to obtain a white-balanced channel value, thereby constructing the white-balanced image.

The preset mapping rule is a rule for mapping initial channel values of each pixel point of the captured image in the color channels into the preset channel value range. In actual image processing, channel values of color channels usually have a reasonable range, such as a common range of [0, 255]. When initial channel values of pixel points in the color channels are calculated and obtained based on the adjustment coefficient, these values may exceed the preset range. The preset mapping rule converts the initial channel values into the preset channel value range through an algorithm, such as linear mapping, to obtain white-balanced channel values. In this way, it may be ensured that image color data after adjustment is within a reasonable interval, avoiding color distortion or abnormal situations. Finally, a white-balanced image meeting requirements is constructed based on these white-balanced channel values.

As an example, it is assumed that the predicted color cast coefficient of the captured image is q, and the predicted color cast coefficient of the standard image is r; then the adjustment coefficient is s = q - r. Moreover, when q is greater than r, s is greater than 0; and when q is less than r, s is less than 0.

Further, for any color channel of any pixel of the captured image, if a channel value of the color channel is t, then an initial channel value of the color channel is w = t × (1 + s).

After determining the white-balanced channel values of the color channels of each pixel point of the captured image and obtaining the white-balanced image, since image data is usually an 8-bit unsigned integer, image data of the white-balanced image may be converted into an np.uint8 type and stored.

In all embodiments of this present disclosure, after determining the captured image, by determining whether the captured image includes the preset image element, it may be determined that the captured image is adjusted based on the predicted color cast coefficient of the captured image in a case where the captured image includes the preset image element, thereby avoiding resource consumption caused by redundant white balance. Moreover, by determining a predicted color cast coefficient based on an average brightness of the captured image, an overall color deviation of the captured image relative to the reference image may be accurately analyzed. Thus, after adjusting the captured image based on the predicted color cast coefficient of the captured image, color distortion of the captured image caused by external factors such as lighting conditions may be effectively removed, making colors of an obtained white-balanced image closer to a real scene, and improving reliability of subsequent image analysis or recognition.

In some feasible implementations, the foregoing determination of the predicted image type of the captured image may be implemented through an image recognition model. The image recognition model is a model configured for image recognition tasks and obtained by training the first initial model. The image recognition model is trained based on the first training sample set. During a training process, the model continuously learns relationships between sample image features of first sample images and actual image types. After the training is completed, the model may receive the image feature of the captured image as an input, and determine the predicted image type of the captured image according to learned patterns. If the predicted image type belongs to a first type, the captured image includes the preset image element. If the predicted image type belongs to a second type, the captured image does not include the preset image element. The image recognition model plays a key role in the image processing flow of this disclosure, and is capable of accurately determining whether the captured image includes the preset image element, to provide a basis for subsequent white balance and other operations.

The image recognition model may be obtained by training in a mode shown in FIG. 6:

S61: Determine a first training sample set, the first training sample set including a plurality of first sample images captured by an image processing device.

The first sample image is a basic image unit constituting the first training sample set. The first sample image is obtained by the image processing device through capturing during an actual working process, and capturing environments cover different lighting conditions. These images have diversity in content: some include a complete preset image element, some include a part of the preset image element, and others do not include the preset image element. Moreover, when the preset image element is a palm image, different first sample images may present various combinations of palm images in different lighting environments, palm images of different persons, palm images in different unfolding states, palm images at different capturing distances, and left and right hands. If the preset image element is a face, different first sample images may reflect faces in various combinations of different ages, different genders, different persons, different expression states, different capturing distances, different lighting environments, and the like.

In some feasible implementations, each first sample image in a first training sample set may be a plurality of images captured by the image processing device during operation.

The first sample images in the first training sample set may be obtained by the image processing device through capturing in different lighting environments.

The first sample images in the first training sample set may include the preset image element, may also not include the preset image element, or may include a part of the preset image element. This is not limited herein.

The first sample images in the first training sample set may include preset image elements of different types. For example, when the preset image element is a palm image, different first sample images may include various combinations of palm images in different lighting environments, palm images of different persons, palm images in different unfolding states, palm images at different capturing distances, and palm images of left and right hands. For another example, if the preset image element is a face, different first sample images may include faces in various combinations of different ages, different genders, different persons, different expression states, different capturing distances, and different lighting environments.

The first training sample set may be constructed by using publicly available images including the preset image element, or may be generated by using an image generation model. This may be determined based on requirements of an actual application scenario, and is not limited herein.

When constructing the first training sample set, image data cleaning, scaling (to the same image size), and the like may be performed on the first sample images in the first training sample set.

Image data cleaning may be performed by finding duplicate values, finding missing values, and finding abnormal values, to remove sample images that are of poor quality, blurred, or irrelevant, thereby improving stability of the model training process.

S62: Determine a sample image feature of each first sample image, and input the sample image feature of each first sample image into a first initial model, to obtain a predicted image type of a corresponding first sample image.

The first initial model is a starting model architecture configured for training the image recognition model. It may be constructed based on a regression algorithm, utilizing characteristics of the regression algorithm to analyze and predict inputted sample image features, or may be designed from scratch as a simple network structure. A number of layers of the network, a number of nodes, and other parameters are determined based on actual requirements. During a training process of the image recognition model, sample image features of the first sample images are inputted into the first initial model. The model predicts predicted image types of the first sample images according to its own algorithm and parameter settings.

In some feasible implementations, a mode of determining sample image features of the first sample images is the same as a mode of determining the image feature of the captured image. For example, a shape feature of the first sample image may be determined as the sample image feature. Through an edge detection algorithm (such as Canny and Sobel), edges in the first sample image may be identified through brightness variations of the pixel points of the first sample image. Further, based on edge detection, continuous contour lines are formed by connecting adjacent edge pixel points, so that a contour feature of the first sample image may be determined based on the contour lines, and used as the sample image feature of the first sample image.

The first initial model may be constructed based on a regression algorithm, or may be a simple network structure designed from scratch. This is not limited herein.

In each iteration training process, sample image features of the first sample images may be inputted into the first initial model, and the first initial model may predict predicted image types of the first sample images.

S63: Determine, based on an actual image type and the predicted image type of each first sample image, a first training loss.

In some feasible implementations, an actual image type of the first sample image may be labeled during a process of constructing the first training sample set.

Actual image types of the first sample images include a first type and a second type. When the actual image type of the first sample image belongs to the first type, the first sample image includes the preset image element; and when the actual image type of the first sample image belongs to the second type, the first sample image does not include the preset image element.

When determining the first training loss, the prediction process of the first initial model may be regarded as a binary classification problem. Therefore, the first training loss may be determined based on the actual image types and the predicted image types of the first sample images through a cross-entropy loss function.

The first training loss indicates a difference between a predicted image type and an actual image type of the first sample image.

In all embodiments of the present disclosure, the prediction process of the first initial model may be regarded as a binary classification problem. The first training loss may be determined based on actual image types and predicted image types of the first sample images through a cross-entropy loss function $L = - {\sum }_{i = 1}^{n} \left[{y}_{i}log\left({p}_{i}\right)+\left(1-{y}_{i}\right)log\left(1-{p}_{i}\right)\right]$, where *n* is a number of samples, *yᵢ* is an actual image type (0 or 1) of an *i*^{th} sample, and *pᵢ* is a probability of a predicted image type of the *i*^{th} sample.

S64: Train the first initial model based on the first training sample set; stop training when the first training loss meets a training end condition; and determine the first initial model at the end of training as a final image recognition model.

In some feasible implementations, in each iteration training process, the first training loss may be determined once based on the foregoing mode. When the first training loss in each iteration training process does not meet the training end condition, an optimization algorithm (such as SGD and Adam) may be used to update model parameters of the first initial model based on gradients, and the first initial model after parameter updating may be trained again through iteration.

The first training loss meeting the training end condition may be that the first training loss is less than a preset threshold, or that a decrease value of loss values in consecutive N iteration training processes is less than a preset decrease value. This may be determined based on requirements of an actual application scenario, and is not limited herein.

When the first training loss in an iteration process meets the training end condition, training may be considered to be completed. At this time, the first initial model obtained by this training may be determined as the final image recognition model.

In some feasible implementations, the foregoing prediction of the color cast coefficient may be implemented by using a color cast prediction model. The color cast prediction model is a model obtained by training a second initial model based on a second training sample set. During a training process, the model learns a relationship between an average brightness value of the second sample image and an actual color cast coefficient. After the training is completed, when the average brightness value of the captured image is inputted, the model may predict the predicted color cast coefficient of the captured image based on a learned relationship. The predicted color cast coefficient is configured for indicating a predicted degree of color cast of the captured image relative to the reference image, to provide an important parameter basis for subsequent white balance adjustment on the captured image, and to help correct a color deviation of the captured image caused by factors such as illumination.

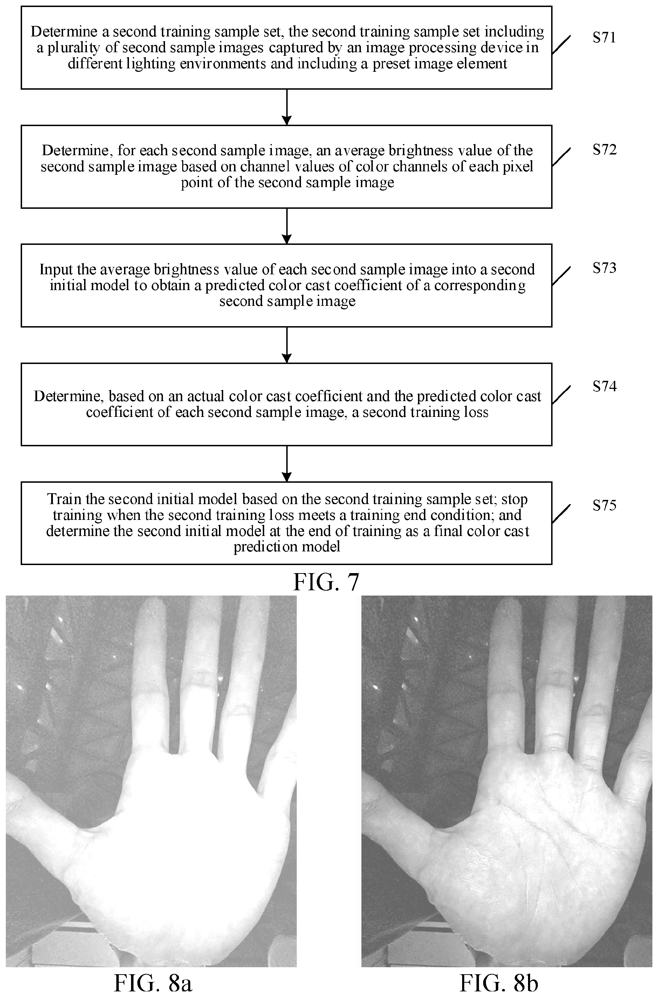

The color cast prediction model may be obtained by training in a mode shown in FIG. 7:
S71: Determine a second training sample set, the second training sample set including a plurality of second sample images captured by the image processing device in different lighting environments and including the preset image element.

The second sample images are images in the second training sample set, obtained by the image processing device through capturing in different lighting environments, and each image includes a preset image element. Similar to the first sample images, types of included preset image elements are rich and diverse. For example, when the preset image element is a palm image, different second sample images may present various combinations of palms in different lighting environments, palms of different persons, palm images in different unfolding states, palm images at different capturing distances, and left and right hands. If the preset image element is a face, different second sample images may reflect faces in various combinations of different ages, different genders, different persons, different expression states, different capturing distances, different lighting environments, and the like.

In some feasible implementations, each second sample image in a second training sample set may be a plurality of images captured by the image processing device during operation.

The second sample images in the second training sample set may be obtained by the image processing device through capturing in different lighting environments.

A second sample image in the second training sample set includes a preset image element.

The second sample images in the second training sample set may include preset image elements of different types. For example, when the preset image element is a palm image, different second sample images may include various combinations of palms in different lighting environments, palms of different persons, palm images in different unfolding states, palm images at different capturing distances, and palm images of left and right hands. For another example, if the preset image element is a face, different second sample images may include faces in various combinations of different ages, different genders, different persons, different expression states, different capturing distances, and different lighting environments.

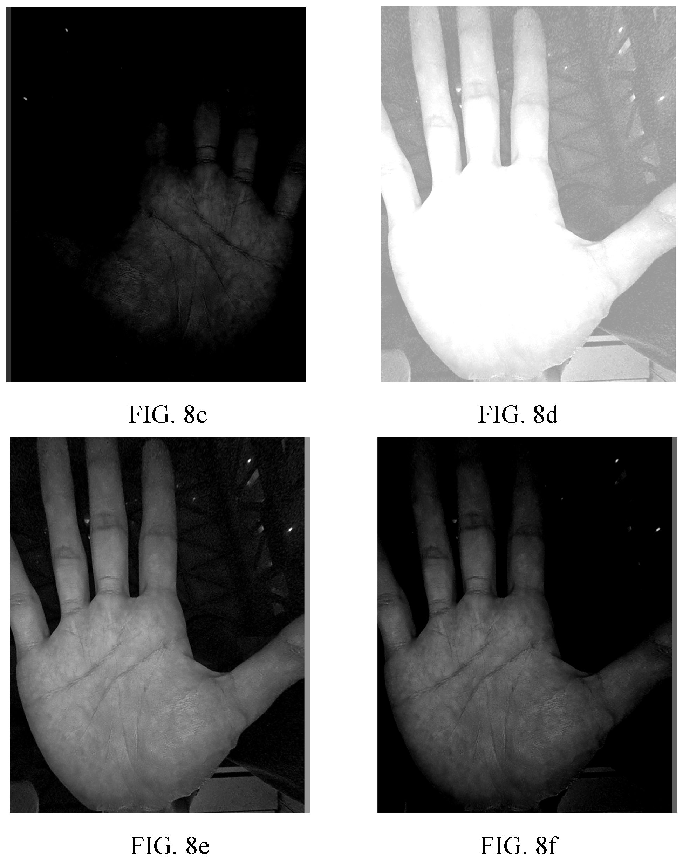

As an example, a part of second sample images in the second training sample set may include palm images in different lighting environments, as shown in FIG. 8a to FIG. 8c, or as shown in FIG. 8d to FIG. 8f.

FIG. 8a to FIG. 8c include the same right palm, and FIG. 8d to FIG. 8f include the same left palm.

The second training sample set may be constructed by using publicly available images including the preset image element, or may be generated by using an image generation model. This may be determined based on requirements of an actual application scenario, and is not limited herein.

When constructing the second training sample set, image data cleaning, scaling (to the same image size), and the like may be performed on second sample images in the second training sample set.

S72: Determine, for each second sample image, an average brightness value of the second sample image based on channel values of color channels of each pixel point of the second sample image.

In some feasible implementations, a mode of determining an average brightness value of the second sample images may refer to the foregoing mode of determining the average brightness value of the captured image.

S73: Input the average brightness value of each second sample image into a second initial model to obtain a predicted color cast coefficient of a corresponding second sample image.

The second initial model is an initial model configured for training the color cast prediction model. It is constructed based on a linear regression algorithm. The linear regression algorithm is capable of establishing a linear relationship between an input average brightness value and a predicted color cast coefficient. During an iteration training process of the color cast prediction model, average brightness values of the second sample images may be inputted into the second initial model. The model may predict a predicted color cast coefficient corresponding to the second sample image according to a calculation mode of the linear regression.

S74: Determine, based on an actual color cast coefficient and the predicted color cast coefficient of each second sample image, a second training loss.

In some feasible implementations, the actual color cast coefficient of the second sample image may be determined and labeled during a process of constructing the second training sample set. The actual color cast coefficient of each second sample image is configured for indicating an actual degree of color cast of a corresponding second sample image relative to the reference image.

When determining the second training loss, the second training loss may be determined based on the actual color cast coefficient and the predicted color cast coefficient of each second sample image through a mean squared error (MSE) function, a mean absolute error (MAE) function, a Huber function, or an L1 loss function. This may be determined based on requirements of an actual application scenario, and is not limited herein.

The second training loss indicates a difference between the predicted color cast coefficient and the actual color cast coefficient of the second sample image.

In all embodiments of the present disclosure, the second training loss may be determined based on the actual color cast coefficient and the predicted color cast coefficient of each second sample image through an MSE function $L = \frac{1}{n} {\sum }_{i = 1}^{n} {\left({y}_{i}-{\hat{y}}_{i}\right)}^{2}$, where *n* is a number of samples, *yᵢ* is an actual color cast coefficient of an *i*^{th} sample, and *ŷᵢ* is a predicted color cast coefficient of the *i*^{th} sample.

S75: Train the second initial model based on the second training sample set; stop training when the second training loss meets the training end condition; and determine the second initial model at the end of training as a final color cast prediction model.

The training end condition is a criterion set during training of a model (including the image recognition model and the color cast prediction model) and configured for determining whether to stop training. For training of the image recognition model, when the first training loss is less than a preset threshold, it means that a difference between a prediction result of the model and an actual situation is sufficiently small and has reached an acceptable range. At this time, it may be considered that training has achieved a relatively good effect and meets the training end condition. In another example, when a decrease value of loss values in consecutive N iteration training processes is less than a preset decrease value, it indicates that performance improvement of the model has become very slow, and continuing training may not bring significant improvement. Training may be stopped. For training of the color cast prediction model, the determination logic is similar. When the second training loss is less than a preset threshold or a decrease value of loss values in consecutive M iteration training processes is less than a preset decrease value, training may be stopped.

In some feasible implementations, in each iteration training process, the second training loss may be determined once based on the foregoing mode. When the second training loss in each iteration training process does not meet the training end condition, an optimization algorithm (such as SGD and Adam) may be used to update model parameters of the second initial model based on gradients, and the second initial model after parameter updating may be trained again through iteration.

The second training loss meeting the training end condition may be that the second training loss is less than a preset threshold, or that a decrease value of loss values in consecutive M iteration training processes is less than a preset decrease value. This may be determined based on requirements of an actual application scenario, and is not limited herein.

When the second training loss in an iteration process meets the training end condition, training may be considered to be completed. At this time, the second initial model obtained by this training may be determined as the final color cast prediction model.

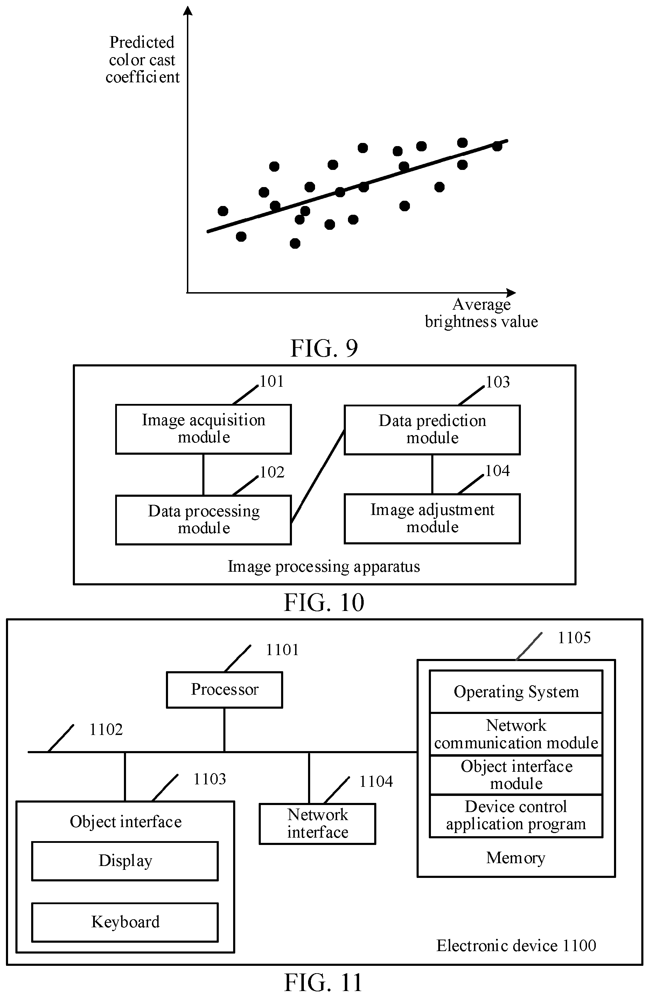

FIG. 9 is a schematic diagram of predicted color cast coefficient distribution according to an embodiment of this disclosure. In FIG. 9, through continuous training of the second initial model, average brightness values of the second sample images and predicted color cast coefficients may present a linear relationship. When model training is completed, the color cast prediction model may obtain a predicted color cast coefficient corresponding to an average brightness value of any image based on the linear relationship obtained by training.

After a training process of the model (the color cast prediction model and the image recognition model) is completed, the model obtained by training may be evaluated by using an independent test set, to verify performance of the model on unknown data. Evaluation metrics usually include accuracy, precision, recall, an F1 score, and the like.

The test set is an independent data set configured for evaluating performance of the model on unknown data after training of the image recognition model and the color cast prediction model is completed. It is independent from a training set and does not participate in a training process of the model. Data in the test set is inputted into a trained model, to obtain a prediction result of the model. Then, the prediction result is compared with real labels of data in the test set, and evaluation metrics such as accuracy, precision, recall, and an F1 score are calculated. These metrics are capable of comprehensively reflecting recognition and prediction capabilities of the model when facing unseen data, to help determine whether the final image recognition model and the color cast prediction model meet requirements of an actual application. If performance of the model on the test set is good, it indicates that the model has a relatively good generalization capability, and may be deployed to the actual application. If the performance is not good, the model may be adjusted and subjected to optimization training.

Accuracy is a proportion of a number of correctly predicted samples to a total number of samples. Precision is a proportion of samples that are truly positive classes among samples predicted by the model as positive classes, such as a proportion of first sample images that truly include the preset image element among first sample images predicted to include the preset image element. Recall is a proportion of samples that are correctly predicted by the model as positive classes among samples that are actually positive classes, such as a proportion of first sample images predicted to include the preset image element among first sample images that actually include the preset image element. The F1 score is a harmonic mean of precision and recall, and is configured for comprehensively evaluating performance of the model.

Based on evaluation results obtained from the test set, the final image recognition model and the color cast prediction model may be determined. If model performance meets requirements, the model may be deployed to the actual application. If the performance is not good, it may be necessary to return to the foregoing operations to be adjusted and subjected to optimization training.

When computer-related functions are invoked to execute the image processing method provided by the embodiment of this disclosure, if an image read by the invoked function is in a BGR format, when images in the captured image, the first training sample set, and the second training sample set are read for processing, a read BGR image may be converted into an RGB image, to ensure that the image processing method provided by the embodiment of this disclosure may be smoothly implemented.

The white-balanced images, the first training sample set, and the second training sample set in the embodiment of this disclosure may be stored in a target storage space associated with the image processing device. The target storage space includes, but is not limited to, cloud storage, a database, a blockchain, and the like. This may be determined based on requirements of an actual application scenario, and is not limited herein.

By determining whether the captured image includes the preset image element through the image recognition model, and determining the predicted color cast coefficient of the captured image through the color cast prediction model, efficiency of generating white-balanced images may be effectively improved. In artificial intelligence application scenarios based on white-balanced images, such as palm verification and payment or face recognition, efficiency of subsequent image processing may be improved, thereby improving convenience and smoothness of operations of people, and thereby enhancing public experience.

Moreover, the image recognition model and the color cast prediction model obtained by training may perform recognition and prediction on images under different lighting and capturing conditions, and may enhance robustness of related application systems. Even if the image processing device works in different environments, efficiency and stability of image white balance may be ensured.

In all embodiments of this present disclosure, for the palm, face (or other biological feature) recognition technology involved therein, when the foregoing embodiments are applied to specific products or technologies, related data collection, use, and processing processes are to comply with requirements of national laws and regulations. Before collecting biological feature information, users are to be informed of information processing rules, and separate consent is to be sought from users. Biological feature information is to be strictly processed in accordance with requirements of laws, regulations, and personal information processing rules; and technical measures are to be adopted to ensure security of related data.

FIG. 10 is a schematic structural diagram of an image processing apparatus according to an embodiment of this disclosure. The image processing apparatus provided in the embodiment of this disclosure includes:
an image acquisition module 101, configured to acquire a captured image;
a data processing module 102, configured to determine, when the captured image includes a preset image element, an average brightness value of the captured image based on channel values of color channels of each pixel point of the captured image;
a data prediction module 103, configured to determine a predicted color cast coefficient of the foregoing captured image based on the average brightness value of the foregoing captured image, the predicted color cast coefficient of the foregoing captured image being configured for indicating a predicted degree of color cast of the foregoing captured image relative to a reference image; and
an image adjustment module 104, configured to adjust, based on the predicted color cast coefficient of the foregoing captured image, the foregoing captured image to generate a white-balanced image.

In some feasible implementations, the foregoing data processing module 102 is configured to:
determine a grayscale image of the foregoing captured image, and perform block processing on the foregoing grayscale image to obtain a plurality of block images;
determine a histogram of oriented gradients feature of each block image, and determine an image feature of the foregoing captured image based on the histogram of oriented gradients feature of each block image;
determine a predicted image type of the foregoing captured image based on the foregoing image feature; and
determine, in response to the predicted image type of the foregoing captured image belonging to a first type, that the foregoing captured image includes the foregoing preset image element; and determine, in response to the predicted image type of the foregoing captured image belonging to a second type, that the foregoing captured image does not include the foregoing preset image element.

In some feasible implementations, the foregoing data processing module 102 is configured to:
determine a depth image of each block image; and
determine a histogram of oriented gradients feature of a corresponding block image based on each depth image.

In some feasible implementations, the foregoing data processing module 102 is configured to:
concatenate, based on position information of each block image relative to the foregoing captured image, the histogram of oriented gradients feature of each block image to obtain the image feature of the foregoing captured image.

In some feasible implementations, the foregoing data processing module 102 is configured to:
determine a first image region in which the foregoing preset image element in the foregoing captured image is located;
determine a first channel value, a second channel value, and a third channel value, the foregoing first channel value being an average channel value of red channels of pixel points of the foregoing first image region, the foregoing second channel value being an average channel value of green channels of the pixel points of the foregoing first image region, and the foregoing third channel value being an average channel value of blue channels of the pixel points of the foregoing first image region;
determine an average brightness value of the foregoing first image region based on the foregoing first channel value, the foregoing second channel value, and the foregoing third channel value; and
determine the average brightness value of the foregoing captured image based on the average brightness value of the foregoing first image region.

In some feasible implementations, the foregoing image adjustment module 104 is configured to:
determine a predicted color cast coefficient of a standard image, the foregoing standard image being an image acquired by an image processing device in a preset lighting environment and including the foregoing preset image element, the predicted color cast coefficient of the foregoing standard image being configured for indicating a predicted degree of color cast of the foregoing standard image relative to the foregoing reference image;
determine an adjustment coefficient based on the predicted color cast coefficient of the foregoing captured image and the predicted color cast coefficient of the foregoing standard image; and
adjust, based on the foregoing adjustment coefficient, the foregoing captured image to generate the white-balanced image.

In some feasible implementations, the foregoing image adjustment module 104 is configured to:
multiply, for each pixel point of the foregoing captured image, the channel value of the pixel point in each color channel by the foregoing adjustment coefficient to obtain a channel value variation, and add the channel value of the pixel point in each color channel and the channel value variation correspondingly to obtain an initial channel value of the pixel point in each color channel; and
determine the white-balanced image based on initial channel values of each pixel point of the foregoing captured image in the color channels.

In some feasible implementations, the foregoing image adjustment module 104 is configured to:
map, according to a preset mapping rule, the initial channel values of each pixel point of the foregoing captured image in the color channels into a preset channel value range, to obtain white-balanced channel values of each pixel point in the color channels; and
determine the white-balanced image based on the white-balanced channel values of each pixel point of the foregoing captured image in the color channels.

In some feasible implementations, the determining a predicted image type of the foregoing captured image based on the foregoing image feature is implemented based on an image recognition model, and the foregoing image recognition model is obtained by training through a training apparatus based on the following mode:
determining a first training sample set, the foregoing first training sample set including a plurality of first sample images captured by the foregoing image processing device;
determining a sample image feature of each first sample image, and inputting the sample image feature of each first sample image into a first initial model, to obtain a predicted image type of a corresponding first sample image;
determining, based on an actual image type and the predicted image type of each first sample image, a first training loss, the actual image type of each first sample image belonging to a first type indicating that the corresponding first sample image includes the foregoing preset image element, and the actual image type of each first sample image belonging to a second type indicating that the corresponding first sample image does not include the foregoing preset image element; and
training the foregoing first initial model based on the foregoing first training sample set; stopping training when the foregoing first training loss meets a training end condition; and determining the first initial model at the end of training as the foregoing image recognition model.

In some feasible implementations, the determining a predicted color cast coefficient of the foregoing captured image based on the average brightness value of the foregoing captured image is implemented based on a color cast prediction model, and the foregoing color cast prediction model is obtained by training through a training apparatus based on the following mode:
determining a second training sample set, the foregoing second training sample set including a plurality of second sample images captured by the foregoing image processing device in different lighting environments and including the foregoing preset image element;
determining, for each second sample image, an average brightness value of the second sample image based on channel values of color channels of each pixel point of the second sample image;
inputting the average brightness value of each second sample image into a second initial model to obtain a predicted color cast coefficient of a corresponding second sample image;
determining, based on an actual color cast coefficient and the predicted color cast coefficient of each second sample image, a second training loss, the actual color cast coefficient of each second sample image being configured for indicating an actual degree of color cast of the corresponding second sample image relative to the foregoing reference image; and
training the foregoing second initial model based on the foregoing second training sample set; stopping training when the foregoing second training loss meets the training end condition; and determining the second initial model at the end of training as the foregoing color cast prediction model.

In some feasible implementations, the image processing device is a palm verification device, and the preset image element is a palm image.

In a specific implementation, the foregoing image processing apparatus may execute implementations provided by the operations in the foregoing FIG. 2 through the function modules built therein. For specific details, reference may be made to implementations provided by the foregoing operations.

FIG. 11 is a schematic structural diagram of an electronic device according to an embodiment of this disclosure. As shown in FIG. 11, an electronic device 1100 in this embodiment may include a processor 1101, a network interface 1104, and a memory 1105. In addition, the foregoing electronic device 1100 may further include an object interface 1103 and at least one communication bus 1102. The communication bus 1102 is configured to implement connection and communication among these components. The object interface 1103 may include a display and a keyboard, and in all embodiments of the present disclosure, the object interface 1103 may further include a standard wired interface and a standard wireless interface. In all embodiments of the present disclosure, the network interface 1104 may include a standard wired interface and a standard wireless interface (for example, a wireless fidelity (WI-FI) interface). The memory 1105 may be a high-speed random access memory (RAM), or may be a non-volatile memory (NVM), for example, at least one magnetic disk memory. In all embodiments of the present disclosure, the memory 1105 may be at least one storage apparatus located away from the foregoing processor 1101. As shown in FIG. 11, the memory 1105 used as a computer-readable storage medium may include an operating system, a network communication module, an object interface module, and a device control application program.

In the electronic device 1100 shown in FIG. 11, the network interface 1104 may provide a network communication function. The object interface 1103 is mainly configured to provide an input interface for an object. The processor 1101 may be configured to invoke a device control application program stored in the memory 1105, to implement the following operations:

In some feasible implementations, the foregoing processor 1101 is configured to:
acquire a captured image;
determine, when the captured image includes a preset image element, an average brightness value of the captured image based on channel values of color channels of each pixel point of the captured image;
determine a predicted color cast coefficient of the foregoing captured image based on the average brightness value of the foregoing captured image, the predicted color cast coefficient of the foregoing captured image being configured for indicating a predicted degree of color cast of the foregoing captured image relative to a reference image; and
adjust, based on the predicted color cast coefficient of the foregoing captured image, the foregoing captured image to generate a white-balanced image.

In some feasible implementations, the foregoing processor 1101 is configured to:
determine a grayscale image of the foregoing captured image, and perform block processing on the foregoing grayscale image to obtain a plurality of block images;
determine a histogram of oriented gradients feature of each block image, and determine an image feature of the foregoing captured image based on the histogram of oriented gradients feature of each block image;
determine a predicted image type of the foregoing captured image based on the foregoing image feature; and
determine, in response to the predicted image type of the foregoing captured image belonging to a first type, that the foregoing captured image includes the foregoing preset image element; and determine, in response to the predicted image type of the foregoing captured image belonging to a second type, that the foregoing captured image does not include the foregoing preset image element.

In some feasible implementations, the foregoing processor 1101 is configured to:
determine a depth image of each block image; and
determine a histogram of oriented gradients feature of a corresponding block image based on each depth image.

In some feasible implementations, the foregoing processor 1101 is configured to:
concatenate, based on position information of each block image relative to the foregoing captured image, the histogram of oriented gradients feature of each block image to obtain the image feature of the foregoing captured image.

In some feasible implementations, the foregoing processor 1101 is configured to:
determine a first image region in which the foregoing preset image element in the foregoing captured image is located;
determine a first channel value, a second channel value, and a third channel value, the foregoing first channel value being an average channel value of red channels of pixel points of the foregoing first image region, the foregoing second channel value being an average channel value of green channels of the pixel points of the foregoing first image region, and the foregoing third channel value being an average channel value of blue channels of the pixel points of the foregoing first image region;
determine an average brightness value of the foregoing first image region based on the foregoing first channel value, the foregoing second channel value, and the foregoing third channel value; and
determine the average brightness value of the foregoing captured image based on the average brightness value of the foregoing first image region.

In some feasible implementations, the foregoing processor 1101 is configured to:
determine a predicted color cast coefficient of a standard image, the foregoing standard image being an image acquired by an image processing device in a preset lighting environment and including the foregoing preset image element, the predicted color cast coefficient of the foregoing standard image being configured for indicating a predicted degree of color cast of the foregoing standard image relative to the foregoing reference image;
determine an adjustment coefficient based on the predicted color cast coefficient of the foregoing captured image and the predicted color cast coefficient of the foregoing standard image; and
adjust, based on the foregoing adjustment coefficient, the foregoing captured image to generate the white-balanced image.

In some feasible implementations, the foregoing processor 1101 is configured to:
multiply, for each pixel point of the foregoing captured image, the channel value of the pixel point in each color channel by the foregoing adjustment coefficient to obtain a channel value variation, and add the channel value of the pixel point in each color channel and the channel value variation correspondingly to obtain an initial channel value of the pixel point in each color channel; and
determine the white-balanced image based on initial channel values of each pixel point of the foregoing captured image in the color channels.

In some feasible implementations, the foregoing processor 1101 is configured to:
map, according to a preset mapping rule, the initial channel values of each pixel point of the foregoing captured image in the color channels into a preset channel value range, to obtain white-balanced channel values of each pixel point in the color channels; and
determine the white-balanced image based on the white-balanced channel values of each pixel point of the foregoing captured image in the color channels.

In some feasible implementations, the determining a predicted image type of the foregoing captured image based on the foregoing image feature is implemented based on an image recognition model, and the foregoing image recognition model is obtained by training through the foregoing processor 1101 based on the following mode:
determining a first training sample set, the foregoing first training sample set including a plurality of first sample images captured by the foregoing image processing device;
determining a sample image feature of each first sample image, and inputting the sample image feature of each first sample image into a first initial model, to obtain a predicted image type of a corresponding first sample image;
determining, based on an actual image type and the predicted image type of each first sample image, a first training loss, the actual image type of each first sample image belonging to a first type indicating that the corresponding first sample image includes the foregoing preset image element, and the actual image type of each first sample image belonging to a second type indicating that the corresponding first sample image does not include the foregoing preset image element; and
training the foregoing first initial model based on the foregoing first training sample set; stopping training when the foregoing first training loss meets a training end condition; and determining the first initial model at the end of training as the foregoing image recognition model.

In some feasible implementations, the determining a predicted color cast coefficient of the foregoing captured image based on the average brightness value of the foregoing captured image is implemented based on a color cast prediction model, and the foregoing color cast prediction model is obtained by training through the foregoing processor 1101 based on the following mode:
determining a second training sample set, the foregoing second training sample set including a plurality of second sample images captured by the foregoing image processing device in different lighting environments and including the foregoing preset image element;
determining, for each second sample image, an average brightness value of the second sample image based on channel values of color channels of each pixel point of the second sample image;
inputting the average brightness value of each second sample image into a second initial model to obtain a predicted color cast coefficient of a corresponding second sample image;
determining, based on an actual color cast coefficient and the predicted color cast coefficient of each second sample image, a second training loss, the actual color cast coefficient of each second sample image being configured for indicating an actual degree of color cast of the corresponding second sample image relative to the foregoing reference image; and
training the foregoing second initial model based on the foregoing second training sample set; stopping training when the foregoing second training loss meets the training end condition; and determining the second initial model at the end of training as the foregoing color cast prediction model.

In some feasible implementations, the image processing device is a palm verification device, and the preset image element is a palm image. In some feasible implementations, the foregoing processor 1101 may be a central processing unit (CPU), and the processor may further be another general-purpose processor, a digital signal processor (DSP), an application specific integrated circuit (ASIC), a field-programmable gate array (FPGA) or another programmable logic device, a discrete gate or a transistor logic device, a discrete hardware component, or the like. The general-purpose processor may be a microprocessor, or the processor may be any processor. The memory may include a read-only memory and a random access memory, and provides instructions and data to the processor. A part of the memory may further include a non-volatile random access memory. For example, the memory may further store information of a device type.

In a specific implementation, the foregoing electronic device 1100 may execute implementations provided by the operations in the foregoing FIG. 2, FIG. 6, and/or FIG. 7 through the function modules built therein. For specific details, reference may be made to implementations provided by the foregoing operations.

An embodiment of this disclosure further provides a computer-readable storage medium (e.g., a non-transitory computer-readable storage medium), the computer-readable storage medium having a computer program stored therein, the computer program being executed by a processor to implement the method provided by the operations in FIG. 2, FIG. 6, and/or FIG. 7. For specific details, reference may be made to implementations provided by the foregoing operations.

The foregoing computer-readable storage medium may be an internal storage unit of the image processing apparatus or the electronic device provided by any one of the foregoing embodiments, for example, a hard disk or an internal memory of the electronic device. The computer-readable storage medium may be an external storage device of the electronic device, for example, a plug-in hard disk, a smart media card (SMC), a secure digital (SD) card, or a flash card equipped on the electronic device. The foregoing computer-readable storage medium may further include a magnetic disk, an optical disc, a read-only memory (ROM), a random access memory (RAM), or the like. Further, the computer-readable storage medium may further include both an internal storage unit and an external storage device of the electronic device. The computer-readable storage medium is configured to store the computer program and other programs and data that are required by the electronic device. The computer-readable storage medium may further be configured to temporarily store data that has been outputted or is to be outputted.

An embodiment of this disclosure provides a computer program product. The computer program product includes a computer program, and the foregoing computer program is executed by a processor to perform the methods provided by the operations of FIG. 2, FIG. 6, and/or FIG. 7.

In summary, this disclosure provides an image processing method and apparatus, a device, a computer-readable storage medium, and a computer program product. After acquiring the captured image, the electronic device continues subsequent processing when the captured image includes the preset image element. This mechanism avoids performing unnecessary white balance operations on images that do not include the preset image element, reduces waste of computing resources, and improves resource utilization of the system. By determining the average brightness value based on channel values of the color channels of each pixel point of the captured image, brightness of the overall image may be comprehensively reflected. The predicted color cast coefficient determined based on the average brightness value may accurately measure a degree of color deviation of the captured image relative to the reference image. The captured image may be adjusted based on the coefficient to generate a white-balanced image, to effectively eliminate color distortion caused by external factors such as illumination, make colors of the image closer to a real scene, provide a high-quality data foundation for subsequent tasks such as image analysis and recognition, and improve accuracy and reliability of subsequent processing.

Further, when determining the average brightness value of the captured image, the first image region in which the preset image element is located may be focused on. First, average channel values of red, green, and blue channels of the pixel points in the region may be determined. Then, the average brightness value of the first image region may be calculated based on this. Further, the average brightness value of the captured image may be determined. This mode narrows a calculation range to a region related to the preset image element, reduces an unnecessary amount of computation, and improves computational efficiency. Meanwhile, since more attention is paid to brightness information of the preset image element, the average brightness value may more accurately reflect actual brightness of the element. More accurate data is provided for subsequent prediction of the predicted color cast coefficient, thereby improving accuracy of color cast coefficient prediction, and further optimizing a white balance effect.

Further, when generating the white-balanced image based on the predicted color cast coefficient of the captured image, the predicted color cast coefficient of the standard image may be introduced as a reference. The standard image is an image acquired in the preset lighting environment and including the preset image element. The predicted color cast coefficient thereof is capable of representing a color deviation situation under an ideal lighting condition. The adjustment coefficient may be determined by comparing the predicted color cast coefficient of the captured image and the predicted color cast coefficient of the standard image, so that an adjustment process is more targeted and accurate. By using the standard image as a reference, a direction and a degree of color deviation of the captured image may be more accurately determined. Therefore, more reasonable color adjustment may be performed on the captured image, colors of the generated white-balanced image may be made closer to a real scene, and visual quality and usability of the image may be improved.

Further, when adjusting the captured image based on the adjustment coefficient, detailed processing may be performed for each color channel of each pixel point. A channel value of a pixel point in each color channel may be multiplied by the adjustment coefficient to obtain a channel value variation. The channel value variation may be added to an original channel value to obtain an initial channel value; and finally, the white-balanced image may be determined based on these initial channel values. Such a pixel-by-pixel and channel-by-channel adjustment mode is capable of accurately correcting color at each position of the image, avoiding color non-uniformity issues that may be brought by overall adjustment. Therefore, colors of the white-balanced image are more uniform and delicate, and quality and visual effect of the image are improved.

Further, when determining the white-balanced image based on initial channel values, the initial channel values may be mapped into a preset channel value range by using a preset mapping rule, to obtain white-balanced channel values. In actual image processing, channel values of color channels have reasonable range restrictions. The initial channel values may exceed the range, causing color distortion or abnormal situations. The preset mapping rule converts the initial channel values into a reasonable range through a specific algorithm, ensuring reasonableness and effectiveness of image color data after adjustment. Therefore, image quality issues caused by abnormal channel values are avoided, and color accuracy and stability of the white-balanced image are improved.

Further, by determining a grayscale image of the captured image and performing block processing, a plurality of block images may be obtained. A HOG feature may be extracted for each block image, and the image feature of the captured image may be determined based on these features, to determine the predicted image type thereof. Block processing divides the image into a plurality of small regions, making feature extraction more detailed and comprehensive. HOG features are capable of capturing edge and texture information of the image, and reflecting local features of the image. By synthesizing features of these block images to determine an overall feature of the captured image, features of the image may be more accurately reflected. Based on this feature, the predicted image type may be determined, improving accuracy of determining whether the captured image includes the preset image element, providing a more reliable basis for subsequent white balance, avoiding invalid processing on images that do not include the preset image element, and improving processing efficiency.

Further, when determining a HOG feature of a block image, a depth image of the block image may be first determined. The depth image provides spatial information of the image. The HOG feature determined based on depth information is more representative and discriminative. Depth information is capable of reflecting spatial relationships such as distances and convexities and concavities of objects in the image, so that the feature is capable of better describing structures and features of the image. Performing subsequent processing based on such a more representative feature may improve accuracy of image feature extraction, improve accuracy of determining whether the captured image includes the preset image element, and provide a more reliable basis for subsequent white balance.

Further, HOG features may be concatenated based on position information of block images relative to the captured image, to obtain the image feature of the captured image. The position information retains a spatial structure of the image, so that the concatenated feature is capable of reflecting an overall feature of the captured image. Different block images have different positions in the image, and features of the block images have different meanings and functions. By considering the position information to perform feature concatenation, these features may be organically combined, to form a more comprehensive and accurate image feature description. This helps to more accurately determine the predicted image type of the captured image, and improves accuracy and reliability of image recognition.

Further, the image recognition model is trained by using a large number of first sample images. First, the first training sample set is determined. The first sample images therein cover different lighting conditions and preset image elements in different states. A feature of each sample image is determined and inputted into the first initial model, to obtain a predicted image type. Further, a training loss is determined based on an actual image type and the predicted image type. Through continuous iteration training, the model learns a relationship between sample image features and actual image types. When the training loss meets a condition, the obtained image recognition model has relatively high accuracy and generalization capability. In an actual application, the model is capable of accurately determining whether the captured image includes the preset image element, providing a reliable decision basis for subsequent white balance, avoiding unnecessary processing operations, and improving processing efficiency and resource utilization of the system.

Further, the color cast prediction model is trained based on the second training sample set. The sample set includes second sample images captured in different lighting environments and including the preset image element. For each sample image, an average brightness value is calculated and inputted into the second initial model, to obtain a predicted color cast coefficient; and a training loss is determined based on an actual color cast coefficient and the predicted color cast coefficient. Through multiple iteration training processes, the model learns a relationship between average brightness values and actual color cast coefficients. The color cast prediction model obtained by training is capable of accurately predicting a color cast coefficient of the captured image based on an average brightness value of the captured image. In actual applications, the color cast prediction model provides precise parameters for white balance, makes color adjustment of the captured image more accurate, and improves quality and effect of white balance.

Further, when the image processing device is a palm verification device and the preset image element is a palm image, the foregoing image processing method has important significance in scenarios such as palm verification and payment. Accurate white balance may make colors of the palm image more authentic, and clearly present feature information such as palm prints. This helps improve accuracy and reliability of palm print recognition, and reduce a probability of misrecognition. In a palm verification and payment process, payment security and efficiency are improved, and a more convenient and secure use experience is provided for users.

When acquiring the captured image, the image processing device may determine a lighting environment through a sensor. When the lighting environment has no light source or a color temperature is lower than a threshold, the RGB light guide ring having a color temperature of 6500 K may be invoked as a supplementary light source to perform capturing. The color temperature of 6500 K is close to natural light, and may make colors of the captured image closer to colors in a natural lighting environment. This provides more authentic and accurate original data for subsequent image processing, facilitates improving an effect of white balance, reduces color deviation caused by poor lighting conditions, and improves quality and usability of the image.

When determining the image feature of the captured image, a plurality of modes may be employed. For example, a shape feature of the captured image (such as a contour feature, a boundary direction histogram feature, and a Fourier shape descriptor feature) may be determined as the image feature. These shape features are capable of describing an external shape of the image from different angles, and provide rich information for image recognition. Shape features may be extracted through algorithms such as edge detection, to highlight key contour and boundary information of the image, and help accurately identify the preset image element. For preset image elements having distinct shape features, such as faces and palm images, accuracy and efficiency of recognition may be improved.

Determining a texture feature of the captured image and using the texture feature as the image feature is of great significance for preset image elements having rich textures, such as fabric and palm prints. Texture features may reflect a visual feature of a homogeneous phenomenon in the image, and reflect a surface organizational structure arrangement attribute of the preset image element. By analyzing texture features, different preset image elements may be more accurately distinguished, and accuracy of image recognition may be improved.

When determining a color feature of the captured image, the captured image is converted into a grayscale image and subjected to block processing. Further, a HOG feature of each block image is determined, and the image feature of the captured image is determined. This mode combines color and gradient information, and may more comprehensively describe features of the image. Block processing makes feature extraction more detailed. HOG features are capable of capturing edge and texture information of the image. By synthesizing these features, accuracy of image recognition may be improved, and a more reliable basis is provided for determining whether the captured image includes the preset image element.

When training the image recognition model and the color cast prediction model, a trained model may be evaluated by using an independent test set. The test set is independent from the training set, and is capable of more objectively examining performance of the model on unknown data. By calculating evaluation metrics such as accuracy, precision, recall, and an F1 score, performance of the model may be comprehensively understood. If the model performs well on the test set, it indicates that the model has a relatively good generalization capability, and may accurately identify images and predict color cast coefficients in the actual application. Conversely, the model may be adjusted and subjected to optimization training, to improve performance and reliability of the model.

In the claims, specification, and accompanying drawings of this disclosure, terms such as "first" and "second" are intended to distinguish between different objects, instead of describing a particular order. In addition, the terms "include", "have", and any variant thereof are intended to cover a non-exclusive inclusion. For example, a process, method, system, product, or electronic device that includes a series of operations or units is not limited to the listed operations or units, but instead, further includes operations or units that are not listed in some embodiments, or further includes other operations or units inherent to the process, the method, the product, or the electronic device in some embodiments. Reference herein to "embodiment" means that specific features, structures, or characteristics described in connection with an embodiment may be included in at least one embodiment of this disclosure. The appearance of this phrase at various positions in the specification does not necessarily all refer to the same embodiment, nor is it a separate or alternative embodiment mutually exclusive with other embodiments. It is explicitly and implicitly understood that the embodiments described herein may be combined with other embodiments. The term "and/or" as used in the specification and the appended claims of this disclosure may refer to any combination of one or more of associated listed items and all possible combinations, and includes such combinations.

It may be noted that units and algorithm operations of examples described in conjunction with the embodiments disclosed herein may be implemented in electronic hardware, computer software, or a combination of the two. In order to clearly illustrate the interchangeability of hardware and software, the composition and operations of the examples have been described above generally according to functions. Different methods may be used to achieve the described function for each particular application, but this implementation shall not be considered outside the scope of this disclosure.

Technical features of the foregoing embodiments may be combined in different manners to form other embodiments. In order to make the description concise, not all the possible combinations of various technical features in the foregoing embodiments are described. However, the combinations of these technical features are to be considered as falling with the scope of the description as long as there is no contradiction therein.

The foregoing embodiments only describe several implementations of this application, which are described specifically and in detail, but cannot be construed as a limitation to the patent scope of this application. For a person skilled in the art, several variations and improvements may be made without departing from the concept of this application. These variations and improvements all fall within the protection scope of this application. Therefore, the protection scope of this patent application is to be subject to the appended claims.

## Claims

1. An image processing method, executable by an electronic device, the method comprising:
acquiring a captured image;
determining, when the captured image comprises a preset image element, an average brightness value of the captured image based on channel values of color channels of each pixel point of the captured image;
determining a predicted color cast coefficient of the captured image based on the average brightness value of the captured image, the predicted color cast coefficient of the captured image indicating a predicted degree of color cast of the captured image relative to a reference image; and
adjusting, based on the predicted color cast coefficient of the captured image, the captured image to generate a white-balanced image.

2. The method according to claim 1, wherein the determining the average brightness value of the captured image based on the channel values of color channels of each pixel point of the captured image comprises:
determining, in the captured image, a first image region that includes at least a portion of the preset image element;
determining a first channel value, a second channel value, and a third channel value, the first channel value being an average channel value of red channels of first pixel points of the first image region, the second channel value being an average channel value of green channels of the first pixel points of the first image region, and the third channel value being an average channel value of blue channels of the first pixel points of the first image region;
determining an average brightness value of the first image region based on the first channel value, the second channel value, and the third channel value; and
determining the average brightness value of the captured image based on the average brightness value of the first image region.

3. The method according to claim 1 or 2, wherein the adjusting, based on the predicted color cast coefficient of the captured image, the captured image to generate a white-balanced image comprises:
determining a standard predicted color cast coefficient of a standard image, the standard image being captured by an image processing device in a preset lighting environment and comprising the preset image element, the standard predicted color cast coefficient of the standard image indicating a predicted degree of color cast of the standard image relative to the reference image;
determining an adjustment coefficient based on the predicted color cast coefficient of the captured image and the standard predicted color cast coefficient of the standard image; and
adjusting, based on the adjustment coefficient, the captured image to generate the white-balanced image.

4. The method according to claim 3, wherein the adjusting, based on the adjustment coefficient, the captured image to generate the white-balanced image comprises:
multiplying, for a first pixel point of the captured image, pixel channel values respectively of the color channels by the adjustment coefficient to obtain pixel channel value variations respectively for the color channels;
adding the pixel channel values of the first pixel point and the pixel channel value variations respectively for the color channels to obtain initial channel values of the first pixel point for the color channels; and
determining the white-balanced image based on initial pixel channel values of each pixel point of the captured image in the color channels.

5. The method according to claim 4, wherein the determining the white-balanced image based on initial channel values of each pixel point of the captured image in the color channels comprises:
mapping, according to a preset mapping rule, the initial pixel channel values of each pixel point of the captured image in the color channels into a preset channel value range, to obtain white-balanced channel values of each pixel point in the color channels; and
determining the white-balanced image based on the white-balanced channel values of each pixel point of the captured image in the color channels.

6. The method according to any one of claims 1 to 5, further comprising:
determining a grayscale image of the captured image, and performing block processing on the grayscale image to obtain a plurality of block images;
determining, respectively for the plurality of block images, features of histogram of oriented gradients,
determining an image feature of the captured image based on the features of histogram of oriented gradients;
determining a predicted image type of the captured image based on the image feature; and
determining, when the predicted image type of the captured image belongs to a first type, that the captured image comprises the preset image element; and
determining, when the predicted image type of the captured image belongs to a second type, that the captured image does not comprise the preset image element.

7. The method according to claim 6, wherein the determining the features of histogram of oriented gradients comprises:
determining a depth image of a block image in the plurality of block images; and
determining a feature of histogram of oriented gradients of the block image based on the depth image.

8. The method according to claim 6 or 7, wherein the determining the image feature of the captured image based on the features of histogram of oriented gradients comprises:
concatenating, based on position information of the plurality of block images relative to the captured image, the features of histogram of oriented gradients to obtain the image feature of the captured image.

9. The method according to any one of claims 6 to 8, wherein the predicted image type of the captured image is determined based on an image recognition model,
the image recognition model is obtained by training; and
the training comprises:
determining a first training sample set, the first training sample set comprising a plurality of first sample images captured by the image processing device;
determining sample image features respectively of the plurality of first sample images,
inputting the sample image features into a first initial model, to obtain predicted image types respectively for the plurality of first sample images;
determining, based on actual image types of the plurality of first sample images and the predicted image types of the plurality of first sample images, a first training loss, an actual image type of a first sample image in the plurality of first sample images indicating whether the first sample image comprises the preset image element, and the actual image type of the first sample image belonging to a second type indicating that the first sample image does not comprise the preset image element; and
training the first initial model to obtain an adjusted first model based on the first training sample set in a direction to reduce the first training loss; and
determining the adjusted first model as the image recognition model when the first training loss meets a training end condition.

10. The method according to any one of claims 1 to 9, wherein the determining the predicted color cast coefficient of the captured image based on the average brightness value of the captured image is implemented based on a color cast prediction model, and the color cast prediction model is obtained by training; and
the training comprises:
determining a second training sample set, the second training sample set comprising a plurality of second sample images captured by the image processing device in different lighting environments and the plurality of second sample images comprising the preset image element;
determining average brightness values respectively of the plurality of second sample images;
inputting the average brightness values of the plurality of second sample images into a second initial model to obtain predicted color cast coefficients respectively of the plurality of second sample images;
determining, based on actual color cast coefficients and the predicted color cast coefficients of the plurality of second sample images, a second training loss of the second initial model, the actual color cast coefficients indicating actual degrees of color cast of the plurality of second sample images relative to the reference image;
training the second initial model to obtain an adjusted second model based on the second training sample set in a direction to reduce the second training loss; and
determining the adjusted second model as the color cast prediction model when the second training loss meets a training end condition.

11. The method according to any one of claims 1 to 10, wherein the image processing device is a palm verification device, and the preset image element is a palm image.

12. An image processing apparatus, the apparatus comprising:
an image acquisition module, configured to acquire a captured image;
a data processing module, configured to determine, when the captured image comprises a preset image element, an average brightness value of the captured image based on channel values of color channels of each pixel point of the captured image;
a data prediction module, configured to determine a predicted color cast coefficient of the captured image based on the average brightness value of the captured image, the predicted color cast coefficient of the captured image indicating a predicted degree of color cast of the captured image relative to a reference image; and
an image adjustment module, configured to adjust, based on the predicted color cast coefficient of the captured image, the captured image to generate a white-balanced image.

13. An electronic device, comprising a processor and a memory, the processor and the memory being interconnected,
the memory being configured to store a computer program, and
the processor being configured to perform, when invoking the computer program, the method according to any one of claims 1 to 11.

14. A non-transitory computer-readable storage medium, the non-transitory computer-readable storage medium having a computer program stored therein, the computer program being executed by a processor to implement the method according to any one of claims 1 to 11.

15. A computer program product, the computer program product comprising a computer program, the computer program, when executed by a processor, implementing the method according to any one of claims 1 to 11.
